# EUROPÄISCHE PATENTANMELDUNG

(11) **EP 2 859 792 A1**
(43) Veröffentlichungstag der Anmeldung: **15.04.2015**
(21) Anmeldenummer: 14003481.0
(22) Anmeldetag: 10.10.2014
(51) Int. Cl.: A01K 27/00, A44B 17/00

(54) **Halsband, insbesondere für Hunde**

(30) Priorität: 10.10.2013 DE 202013008999 U
(71) Anmelder: Wilholt, Björn, 47495 Rheinberg (DE)
(72) Erfinder: Wilholt, Björn, 47495 Rheinberg (DE)
(74) Vertreter: Bill, Burkart Hartmut

(57) **Zusammenfassung**

Die Erfindung betrifft ein Halsband, insbesondere für Hunde, welches gekennzeichnet ist durch ein Gurtband (1), an dessen einem Ende eine Halteinrichtung (3), insbesondere in Art eines Ringes, befestigt ist, und an dessen anderem Ende das Oberteil (4) eines selbstsichernden Druckknopfes befestigt ist, und wobei beabstandet zu beiden Enden des Gurtbandes (1) wenigstens zwei erste Ösen (5a, 5b) in dem Gurtband befestigt sind, sowie durch ein zu dem Oberteil (4) des selbstsichernden Druckknopfes komplementär ausgebildetes Unterteil (6) eines selbstsichernden Druckknopfes, wobei das Unterteil (6) zwei lösbar miteinander verbindbare Komponenten (6a, 6b) umfasst, durch eine der ersten Ösen (5a) geführt ist und in dieser Öse (5a) durch Verbindung der beiden Komponenten (6a, 6b) lösbar am Gurtband (1) befestigt ist.

## Beschreibung

Die Erfindung betrifft ein Halsband, insbesondere für Hunde.

Aufgabe der Erfindung ist es, ein verbessertes Halsband, insbesondere für Hunde bereitzustellen, welches auf einfache Weise in der Größe verstellbar ist und gleichzeitig eine hohe Haltekraft bietet.

Die Aufgabe wird auf überraschende Weise durch ein Halsband mit den Merkmalen nach Anspruch 1 gelöst. Zweckmäßige Weiterbildungen sind Gegenstand der Unteransprüche.

Die Erfindung schlägt demnach ein Halsband, insbesondere für Hunde, vor, welches ein Gurtband besitzt, an dessen einem Ende eine Halteinrichtung, insbesondere in Art eines Ringes, befestigt ist, und an dessen anderem Ende das Oberteil eines selbstsichernden Druckknopfes befestigt ist, und wobei beabstandet zu beiden Enden des Gurtbandes wenigstens zwei erste Ösen in dem Gurtband befestigt sind. Das Halsband besitzt ferner ein zu dem Oberteil des selbstsichernden Druckknopfes komplementär ausgebildetes Unterteil eines selbstsichernden Druckknopfes. Zumindest das Unterteil umfasst zwei lösbar miteinander verbindbare Komponenten und ist durch eine der ersten Ösen geführt und in dieser Öse durch Verbindung der beiden Komponenten lösbar am Gurtband befestigt.

Wesentliche Vorteile der Erfindung sind darin zu sehen, dass aufgrund der wenigstens zwei ersten Ösen und des lösbar in einer der Ösen befestigbaren Unterteils eines selbstsichernden Druckknopfes eine flexible Größeneinstellung des Halsbandes gegeben ist.

Ferner ist aufgrund der Nutzung eines selbstsichernden Druckknopfes und der Anordnung der ersten Ösen beabstandet zu beiden Enden des Gurtbandes eine wesentlich erhöhte Haltkraft gegeben.

Zweckmäßig ist ferner vorgesehen, dass zur Befestigung des Oberteils des selbstsichernden Druckknopfes an dem Gurtband eine zweite Öse in dem Gurtband befestigt ist und, dass auch das Oberteil zwei lösbar miteinander verbindbare Komponenten umfasst, durch die zweite Öse geführt ist und in dieser zweiten Öse durch Verbindung der beiden Komponenten lösbar am Gurtband befestigt ist.

Hierdurch kann das Halsband als Wendehalsband genutzt werden, welches insbesondere dann von Vorteil ist, wenn die beiden Seiten des Gurtbandes zusätzlich unterschiedlich gestaltet sind, so jede der Seiten des Gurtbandes als Innenseite oder als Außenseite des Halsbandes nutzbar ist.

Zur lösbaren Verbindung von jeweils zwei lösbar miteinander verbindbaren Komponenten ist zweckmäßig vorgesehen, dass die jeweils eine Komponente einen Bolzen mit Außengewinde umfasst, welcher sich durch die jeweilige Öse hindurch erstreckt, sowie eine Sicherungseinrichtung, die von einer Seite der jeweiligen Öse kommend von außen an der Öse anliegt, und die jeweils andere Komponente eine Sicherungseinrichtung mit Innengewinde umfasst, wobei diese von der jeweils gegenüberliegenden Seite der jeweiligen Öse kommend von außen an der Öse anliegt und das Innengewinde mit dem Außengewinde eine lösbare Verbindung miteinander eingehen.

Zweckmäßig ist das Ende des Gurtbandes, an welchem das Oberteil des selbstsichernden Druckknopfes befestigt ist, durch die am anderen Ende des Gurtbandes befestigte Halteinrichtung geführt und bildet im Überlappungsbereich der beiden Gurtbandenden das äußere der beiden Gurtbandenden, welches abermals die Haltekraft des Halsbandes erhöht.

Die Erfindung wird nachfolgend anhand eines Ausführungsbeispiels unter Bezugnahme auf die Zeichnungen näher beschrieben, wobei in den Zeichnungen zeigen:
Fign. 1 bis 3 verschiedene Ansichtsskizzen einer bevorzugten Ausführungsform des Halsbandes gemäß der Erfindung,
Fig. 4 eine Skizze einer ersten Komponente eines Oberteils eines selbstsichernden Druckknopfes für ein Halsband nach den Fign. 1 bis 3,
Fig. 5 eine Skizze einer ersten Komponente eines Unterteils eines selbstsichernden Druckknopfes für ein Halsband nach den Fign. 1 bis 3, und
Fig. 6 eine Skizze einer zweiten Komponente eines Oberteils oder eines Unterteils eines selbstsichernden Druckknopfes für ein Halsband nach den Fign. 1 bis 3.

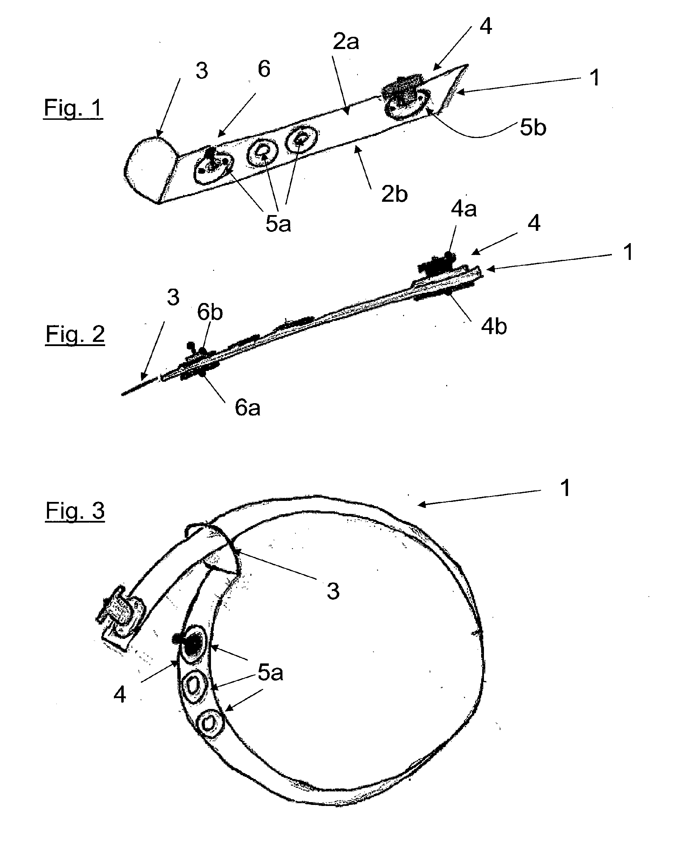

Die Figuren 1 bis 3 zeigen skizzenhaft verschiedene Ansichten einer bevorzugten Ausführungsform eines Halsbandes, insbesondere für Hunde, nach der Erfindung.

Bei der in den Figuren dargestellten Ausführungsform besitzt das Halsband ein Gurtband 1. Dieses kann z.B. ein KFZ-Sicherheitsgurtband sein und weist zwei gegenüberliegende Seiten 2a und 2b auf, die unterschiedlich gestaltet sein können, insbesondere auch durch Aufbringung verschiedener Materialien, wie z.B. Leder, Kunstleder, LKW-Plane, Stoff, Fellen.
An dem einem Ende des Gurtbandes 1 ist eine Halteinrichtung 3 befestigt und an dem anderem Ende des Gurtbandes 1 das Oberteil 4 eines selbstsichernden Druckknopfes. Die Halteeinrichtung kann insbesondere in Art eines Ringes, einschließlich eines D-förmigen oder O-förmigen Ringes, ausgestaltet sein. An der Halteeinrichtung 3 kann z.B. eine Hundeleine angeschlossen werden.

Bekanntermaßen ist ein wesentliches Merkmal eines selbstsichernden Druckknopfes, dass dieser nicht einfach auf Zug wieder zu trennen ist, sondern im Oberteil oder im Unterteil eine Verschlusssicherung eingebaut ist, die zunächst gelöst werden muss, um das Oberteil vom Unterteil des Druckknopfes trennen zu können. Herkömmlicher Weise ist aufgrund der Handhabbarkeit eine solche Verschlusssicherung im Oberteil eingebaut und kann durch Relativbewegung zweier zueinander verschiebbarer Oberteilabschnitte gelöst werden. Da derartige Verschlusssicherungen im Allgemeinen bekannt sind, ist eine solche Verschlusssicherung aus Gründen der Übersichtlichkeit in den Figuren nicht dargestellt.

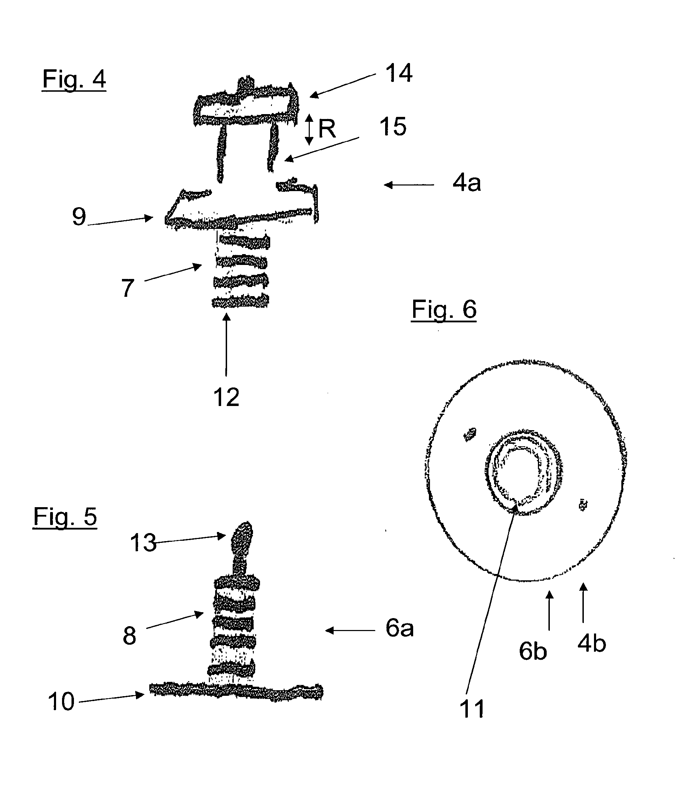

Ferner sind beabstandet zu beiden Enden des Gurtbandes 1 wenigstens zwei erste Ösen 5a in dem Gurtband befestigt sind. Ein zu dem Oberteil 4 des selbstsichernden Druckknopfes komplementär ausgebildetes Unterteil 6 des selbstsichernden Druckknopfes besitzt zwei lösbar miteinander verbindbare Komponenten 6a, 6b (Fig. 5, 6), ist durch eine der ersten Ösen 5a geführt (Fig. 2) und in dieser Öse 5a durch Verbindung der beiden Komponenten 6a, 6b lösbar am Gurtband 1 befestigt.

Bei der in den Figuren 1 bis 3 dargestellten Ausführungsform, bei welcher das Oberteil 4 des selbstsichernden Druckknopfes an einem Ende des Gurtbandes befestigt ist, ist zur Befestigung dieses Oberteils 4 an dem Gurtband zweckmäßig ferner eine zweite Öse 5b in dem Gurtband befestigt und das Oberteil 4 des selbstsichernden Druckknopfes umfasst gleichermaßen zwei lösbar miteinander verbindbare Komponenten 4a, 4b (Fig. 4, 6).

Gemäß Fig. 6 ist zweckmäßig vorgesehen, dass die Komponente 4b und die Komponente 6b zwar jeweils separat jedoch grundsätzlich identisch ausgebildet sein können.

Das Oberteil 4 kann demnach durch die zweite Öse 5b geführt (Fig. 2) und in dieser zweiten Öse 5b durch Verbindung der beiden Komponenten 4a, 4b gleichermaßen lösbar am Gurtband 1 befestigt sein. Hierdurch kann das Halsband auf einfache Weise von beiden Seiten getragen werden, indem man sowohl das Oberteil 4 als auch das Unterteil 6 des selbstsichernden Druckknopf im Gegensatz zur Darstellung nach den Figuren 1 bis 3 jeweils zur anderen Seite 2b des Gurtbandes hin ausgerichtet an diesem montiert.

Die ersten Ösen 5a und die zweite Öse 5b können in an und für sich bekannter Weise in das Gurtband eingesetzt oder geschlagen sein.

Wie insbesondere den Figuren 4 bis 6 zu entnehmen ist, umfasst zur zweckmäßigen Verbindung der jeweils zwei lösbar miteinander verbindbare Komponenten 4a und 4b bzw. 6a und 6b, die jeweils eine Komponente, z.B. die Komponente 4a bzw. die Komponente 6a, einen Bolzen 7 bzw. 8 mit Außengewinde, der sich im am Gurtband montierten Zustand durch die jeweilige Öse hindurch erstreckt.

Ferner besitzt diese jeweilige Komponente 4a bzw. 6a eine erste Sicherungseinrichtung 9 bzw. 10, z.B. in Form einer Scheibe die von einer Seite der jeweiligen Öse kommend von außen an der Öse anliegt.

Die jeweils andere Komponente 4b oder 6b besitzt eine zweite Sicherungseinrichtung, z.B. in Form einer Scheibe, mit Innengewinde 11, wobei die zweite Sicherungseinrichtung der Komponente 4b oder 6b gleichermaßen jedoch von der jeweils gegenüberliegenden Seite der jeweiligen Öse kommend von außen an der Öse anliegt und das Innengewinde 11 mit dem Außengewinde des Bolzen 7 oder 8 eine lösbare Verbindung miteinander eingeht. Hierdurch ist das Oberteil bzw. das Unterteil jeweils in der Öse gesichert befestigt.

Z.B. ist gemäß den Figuren 4 und 5 in dem Bolzen 7 des Oberteils eine Aufnahmeöffnung 12 für einen am Unterteil angeordneten Druckknopfzapfen 13 vorgesehen sowie in der Aufnahmeöffnung 12 eine Verschlusssicherung für den Druckknopfzapfen 13 integriert, welche sich z.B. durch Relativbewegung (Pfeil "R" in Fig. 4) der Oberteilabschnitte 14 und 15 lösen lässt.

Ferner ist das Ende des Gurtbandes, an welchem das Oberteil 4 des selbstsichernden Druckknopfes befestigt ist, zweckmäßig durch die am anderen Ende des Gurtbandes befestigte Halteinrichtung 3 zu führen (Fig. 3) und bildet somit im Überlappungsbereich der beiden Gurtbandenden das äußere der beiden Gurtbandenden.

Bei der dargestellten Ausführungsform kann somit durch einfaches Versetzen des Unterteils 6 des selbstsichernden Druckknopfes in eine andere erste Öse 5a das Halsband größer oder kleiner gestellt werden.

### Bezugszeichenliste

- 1: Gurtband
- 2a, 2b: gegenüberliegende Seiten des Gurtbandes
- 3: Halteinrichtung
- 4: Oberteil eines selbstsichernden Druckknopfes
- 4a, 4b: lösbar miteinander verbindbare Komponenten des Oberteils
- 5a: erste Ösen
- 5b: zweite Öse
- 6: Unterteil des selbstsichernden Druckknopfes
- 6a, 6b: lösbar miteinander verbindbare Komponenten des Unterteils
- 7: Bolzen des Oberteils mit Außengewinde
- 8: Bolzen des Unterteils mit Außengewinde
- 9: erste Sicherungseinrichtung des Oberteils
- 10: erste Sicherungseinrichtung des Oberteils
- 11: Innengewinde an zweiter Sicherungseinrichtung des Ober- oder Unterteils
- 12: Aufnahmeöffnung des Oberteils
- 13: Druckknopfzapfen des Unterteils
- 14, 15: Oberteilabschnitte
- R: Relativbewegung

## Patentansprüche

1. Halsband, insbesondere für Hunde, **gekennzeichnet durch**
- ein Gurtband (1), an dessen einem Ende eine Halteinrichtung (3), insbesondere in Art eines Ringes, befestigt ist, und an dessen anderem Ende das Oberteil (4) eines selbstsichernden Druckknopfes befestigt ist, und wobei beabstandet zu beiden Enden des Gurtbandes (1) wenigstens zwei erste Ösen (5a, 5b) in dem Gurtband befestigt sind, sowie
- ein zu dem Oberteil (4) des selbstsichernden Druckknopfes komplementär ausgebildetes Unterteil (6) eines selbstsichernden Druckknopfes, wobei das Unterteil (6) zwei lösbar miteinander verbindbare Komponenten (6a, 6b) umfasst, **durch** eine der ersten Ösen (5a) geführt ist und in dieser Öse (5a) **durch** Verbindung der beiden Komponenten (6a, 6b) lösbar am Gurtband (1) befestigt ist.

2. Halsband nach Anspruch 1, wobei zur Befestigung des Oberteils (4) an dem Gurtband eine zweite Öse in dem Gurtband befestigt ist, und wobei das Oberteil (4) des selbstsichernden Druckknopfes zwei lösbar miteinander verbindbare Komponenten (4a, 4b) umfasst, durch die zweite Öse (5b) geführt ist und in dieser zweiten Öse (5c) durch Verbindung der beiden Komponenten (4a, 4b) lösbar am Gurtband (1) befestigt ist.

3. Halsband nach Anspruch 1 oder 2, wobei zur Verbindung der jeweils zwei lösbar miteinander verbindbare Komponenten (4a, 4b; 6a, 6b), die eine Komponente einen Bolzen (7; 8) mit Außengewinde umfasst, welcher sich durch die jeweilige Öse hindurcherstreckt, sowie eine Sicherungseinrichtung, die von einer Seite der jeweiligen Öse kommend von außen an der Öse anliegt, und die jeweils andere Komponente eine Sicherungseinrichtung mit Innengewinde (11) umfasst, wobei diese von der jeweils gegenüberliegenden Seite der jeweiligen Öse kommend von außen an der Öse anliegt und das Innengewinde mit dem Außengewinde jeweils eine lösbare Verbindung miteinander eingeht.

4. Halsband nach Anspruch 1, 2 oder 3, wobei das Ende des Gurtbandes, an welchem das Oberteil (4) des selbstsichernden Druckknopfes befestigt ist, durch die an dem einen Ende des Gurtbandes befestigte Halteinrichtung (3) geführt ist und im Überlappungsbereich der beiden Gurtbandenden das äußere der beiden Gurtbandenden bildet.
